# EUROPEAN PATENT SPECIFICATION

(11) **EP 4 483 054 B1**
(45) Date of publication and mention of the grant of the patent: **01.04.2026**
(21) Application number: 23703480.6
(22) Date of filing: 10.02.2023
(51) Int. Cl.: F03D 80/60, F16H 57/04

(54) **A WIND TURBINE COMPRISING A LIQUID COOLER AND A METHOD FOR COOLING A LIQUID**
WINDTURBINE MIT EINEM FLÜSSIGKEITSKÜHLER UND VERFAHREN ZUM KÜHLEN EINER FLÜSSIGKEIT
ÉOLIENNE DOTÉE D'UN REFROIDISSEUR DE LIQUIDE ET PROCÉDÉ DE REFROIDISSEMENT D'UN LIQUIDE

(30) Priority: 22.02.2022 WO PCT/EP2022/054339
(43) Date of publication of application: 01.01.2025
(73) Proprietor: Hydraspecma A/S, 6900 Skjern (DK)
(72) Inventor: STUBKIER, Søren Imer, 8600 Silkeborg (DK); ØSTERGAARD, Jakob Amby, 8600 Silkeborg (DK); NIELSEN, Christian Reiner, 6940 Lem St (DK)
(74) Representative: Patentgruppen A/S
(86) International application number: PCT/EP2023/053272
(87) International publication number: WO 2023/161036

(56) References cited:
- EP-A1- 3 296 566
- EP-B1- 2 153 064
- US-A1- 2012 124 984
- US-A1- 2013 183 138
- US-A1- 2018 031 111

## Description

### Background of the invention

The invention relates to a wind turbine comprising a wind turbine gearbox, a generator and/or a converter arranged inside a nacelle of the wind turbine. The wind turbine further comprises a liquid cooler arranged to cool a liquid flowing through the wind turbine gearbox, the generator and/or the converter by way of air ambient to the nacelle. The invention also relates to a method for cooling a liquid flowing through a wind turbine gearbox, a generator and/or a converter arranged inside a nacelle of a wind turbine, by way of a liquid cooler arranged to cool the liquid by way of air ambient to the nacelle.

### Description of the Related Art

It is known to cool cooling liquids by means of ambient air because the ambient air provides a free and readily available cooling source. And particularly in relation to wind turbines it is known to cool cooling liquids by guiding the liquid through a cooler (also sometime referred to as a radiator, a heat exchanger, heat sink or other) placed outside the nacelle of the wind turbine, in that when heat generating components in the wind turbine is strained the most - because of high wind speeds - the more cooling effect the wind will have on the cooler.

An external passive cooler is normally designed to warm ambient conditions and relatively low wind speed, since this is the conditions, where it requires the largest cooler area to remove the heat from the cooling liquid. However, a consequence is that at lower temperatures and higher wind speeds, the cooling capacity of the cooler is much higher. At cold ambient temperatures, for example below 0° C and high wind speeds (e.g., more than 11 m/s) the cooler will be so efficient that the temperature of the cooling liquid sent through the cooler will be reduced to ambient temperature.

It is therefore not possible to cool e.g., the gearbox oil of a wind turbine gearbox by running it directly through an external passive oil cooler in that oil reduced to temperatures below e.g., 0° C to -10° C, will be very viscous and therefore have great difficulties in flowing through the cooler. At temperatures below e.g., -20° C, the oil can get so viscous that the cooler clogs completely. Likewise, if antifreeze-containing liquid used as a coolant becomes too cold it turns into slush ice or even solid and/or the liquid can become so cold that it might damage the components it is cooling - e.g., if electrical components in a converter becomes too cold, moisture in the surrounding air will condensate on the components and potentially damage them.

Thus, from the US patent US 7,832,467 B2 it is known to form an oil cooler with a bypass tube and a blocking element arranged to enable flow through the bypass tube if the oil clogs the cooler or the temperature of the oil drops below a certain level. However, this cooler design is not particularly cost-efficient.

And from US patent US 8,052,383 B2 it is known to form a system for cooling heat generating component housed within the wind turbine nacelle by means of a heat exchanger placed outside of the wind turbine nacelle and then provide the system with a bypass arranged inside the nacelle, wherein the bypass will prevent the fluid from flowing through the external heat exchanger if the temperature of the fluid is too low. However, this system is also not particularly cost-efficient.

From the European patent EP 2 153 064 B1 a wind turbine comprising a first temperature control system and means for exchanging heat with a further temperature control system I known. EP 2 153 064 B1 disclose that the first temperature control system can include a traditional radiator and an additional radiator, wherein a further temperature controlled valve will redirect fluid around the traditional radiator and through the additional radiator when the temperature drops beneath a predefined level. However, this system is complex and difficult to install. An object of the invention is therefore to provide for a more cost-efficient liquid cooling technique for a wind turbine.

### The invention

The invention provides for a wind turbine comprising a wind turbine gearbox, a generator and/or a converter arranged inside a nacelle of the wind turbine. The wind turbine further comprises a liquid cooler arranged to cool a liquid flowing through the wind turbine gearbox, the generator and/or the converter by way of air ambient to the nacelle. The liquid cooler comprises a first liquid cooler part having a first part cooling capacity, and a second liquid cooler part having a second part cooling capacity, wherein the second part cooling capacity is greater than the first part cooling capacity. The liquid cooler also comprises a bypass conduit arranged to guide a liquid from the first liquid cooler part past the second liquid cooler part, and valve means arranged to control flow through the bypass conduit, wherein the valve means are controlled based on at least one characteristic of the liquid flowing through the liquid cooler, and wherein the first liquid cooler part and the second liquid cooler part are formed as a single contiguous unit.

Providing the liquid cooler with valve means controlling the flow through a bypass conduit directing the liquid from the first liquid cooler part around the second liquid cooler part in response to one or more qualities of the liquid flow is advantageous in that it is hereby possible the adjust the overall cooling capacity of the liquid cooler in a simple manner, and thereby adapt the overall cooling capacity of the liquid cooler to specific conditions - such as wind speed, ambient temperature, wind direction or other - in a simple and effective manner.

Forming the cooler with a first liquid cooler part and a second liquid cooler part so that the cooling capacity of the second liquid cooler part is higher than the cooling capacity of the first part cooling capacity is advantageous in that the liquid cooler hereby becomes more versatile in that the first liquid cooler part can be designed for cold ambient temperature operation only and therefore has to have a relatively low cooling capacity. The second liquid cooler part however, can be designed to operate in higher ambient temperatures and therefore has to have a relatively high cooling capacity so that the liquid cooler in more efficient over the entire ambient temperature range at which the liquid cooler operates.

Furthermore, the present liquid cooler design ensures that the first liquid cooler part is not bypassed when ambient conditions become warmer and can hence be added to the complete cooler area for warm ambient conditions, when heat rejection is critical whereby the cooler becomes more cost-efficient. And by solving the cooling capacity problem inside the liquid cooler a simple cooling system is ensure in which additional tubing and other in the nacelle is avoided and whereby the liquid cooler is simple to retrofit on existing wind turbines.

Forming the first liquid cooler part and the second liquid cooler part as a single contiguous coherent unit is advantageous in that this enables easy handling and fitting of the liquid cooler.

It should be emphasised that by the term *"cooler"* is to be understood as any kind of arrangement capable of cooling a liquid - such as any kind of radiator - e.g., a liquid-air convective cooling radiator, a heat exchanger - such as a liquid-air heat exchanger - or a similar arrangement. The cooler may or may not comprise a fan or a similar arrangement arranged to generate or increase the flow through the cooler of the medium to which the liquid delivers heat when passing through the cooler.

Furthermore, in this context the term *"valve means"* is to be understood as any kind of valve capable of controlling the flow through a bypass conduit in a liquid cooler. I.e., the term includes any kind of spring-loaded valve, motor actuated valve, thermo actuated valve, pilot pressure or pressure actuated valve or any other kind of valve.

In an aspect of the invention, the valve means comprise a spring-loaded valve.

A spring-loaded valve - also called a spring check valve - is a simple and effective way to form a mechanical valve which will enable flow through the bypass conduit when the pressure on the valve exceeds the closing force of the spring.

In an aspect of the invention, the valve means comprise a motor actuated valve, a thermo actuated valve or a pilot pressure actuated valve.

A motor actuated valve enables more precise control of the valve e.g., in response to a temperature sensor, a pressure sensor or other detecting properties of the liquid being cooled in the liquid cooler.

A thermo actuated valve is advantageous in that it enables precise operation in response to the temperature of the liquid at the valve without the need of additional sensors.

A pilot pressure actuated valve is advantageous in that it enables precise operation of the valve according to the pressure of the liquid at the valve or distant to the valve without the need of pressure sensors or the like.

In an aspect of the invention, the characteristic of the liquid flowing through the liquid cooler includes a temperature of the liquid.

Arranging the valve means to control flow through the bypass conduit based on the temperature of the liquid in the liquid cooler is advantageous in that the lower the temperature of the liquid becomes the more viscous the liquid becomes - i.e., the risk of reduced flow or even clogging increases. And the point of the cooler is to cool the liquid down below a specific temperature and if this temperature has already been reached after passing the liquid though the first liquid cooler part there is no point in leading it through the second liquid cooler part.

In an aspect of the invention, the characteristic of the liquid flowing through the liquid cooler includes a pressure of the liquid.

If the ambient temperatures are too low, the liquid becomes too viscous to flow freely through the second liquid cooler part and the pressure inside the liquid cooler will thereby increase. Thus, it is advantageous to control flow through the bypass conduit based on the pressure of the liquid inside the liquid cooler.

In an aspect of the invention, the characteristic of the liquid flowing through the liquid cooler includes a viscosity of the liquid.

If the liquid becomes too viscous it cannot flow freely through the second liquid cooler part and the efficiency of the liquid cooler is reduced and the risk of clogging increases. Thus, it is advantageous to control flow through the bypass conduit based on the viscosity of the liquid inside the liquid cooler.

In an aspect of the invention, the valve means are arranged to enable flow through the bypass conduit if a pressure inside the liquid cooler is between 1.2 - 30 Bar, preferably between 1.4 - 20 Bar, and most preferred between 1.6 - 10 Bar.

If the pressure at which the valve means will enable flow through the bypass conduit in the liquid cooler is too low, the liquid is not sufficiently cooled and if the pressure is too high the liquid is cooled too much and the liquid risks clogging the liquid cooler. Thus, the present pressure limits present advantageous limits in relation to efficiency of the cooler.

In an aspect of the invention, the second part cooling capacity is greater than the first part cooling capacity in that first part cooling channels through the first liquid cooler part are shorter than second part cooling channels through the second liquid cooler part.

Forming the cooling channels - through which the liquid flows through the liquid cooler parts - shorter in the first liquid cooler part than in the second liquid cooler part is a simple and efficient way of ensuring that the second part cooling capacity is greater than the first part cooling capacity. Furthermore, this enables that the first part cooling channels second part cooling channels and the second part cooling channels can be formed by the same tubing, pipes or similar which enables low manufacturing costs.

In an aspect of the invention, the second part cooling capacity is greater than the first part cooling capacity in that the smallest cross-sectional area of first part cooling channels of the first liquid cooler part is bigger than the smallest cross-sectional area of second part cooling channels of the second liquid cooler part.

Forming the smallest cross-sectional area of the first part cooling channels bigger than the smallest cross-sectional area of the second part cooling channels is a simple and efficient way of ensuring that the second part cooling capacity is greater than the first part cooling capacity. Furthermore, the larger cross-sectional area of the first part cooling channels reduces the risk of the liquid clogging in the first liquid cooler part in extreme conditions.

In an aspect of the invention, the second part cooling capacity is greater than the first part cooling capacity in that the effective cooling area of the first liquid cooler part is smaller than the effective cooling area of the second liquid cooler part.

Designing the liquid cooler so that the effective cooling area - i.e., the area of the cooler through which air flows so that the liquid exchanges heat with the air - of the first liquid cooler part is smaller than the effective cooling area of the second liquid cooler part is a simple and efficient way of ensuring different cooling capacities of the two cooler parts.

In an aspect of the invention, the first liquid cooler part and the second liquid cooler part are connected by a common liquid conduit arranged so that liquid flowing through the first liquid cooler part is exciting in the common liquid conduit and so that liquid entering the second liquid cooler part is entering from the common liquid conduit.

Forming the liquid cooler with a common liquid conduit arranged between the first liquid cooler part and the second liquid cooler part is advantageous in that this enables a simple, compact, and efficient liquid cooler design.

In an aspect of the invention, the bypass conduit is fluidly connected to the common liquid conduit.

Connecting the bypass conduit to the common liquid conduit is a simple and efficient way of ensuring that the bypass conduit can guide the liquid past the second liquid cooler part when needed.

In an aspect of the invention, the smallest cross-sectional area of the bypass conduit is greater than the smallest cross-sectional area of second part cooling channels of the second liquid cooler part.

Forming the cross-sectional area of the bypass conduit greater than the cross-sectional area of the second part cooling channels of the second liquid cooler part is advantageous in that it hereby is ensured that the liquid can flow more freely through the bypass conduit when the viscosity of the liquid hinders free easy flow through the second liquid cooler part. Thereby is an efficient liquid cooler design ensured.

In an aspect of the invention, the liquid is oil or an antifreeze-containing liquid.

Oil and antifreeze-containing liquids will thicken considerably if the temperature of these liquids becomes too low and it is therefore particularly advantageous to cool a wind turbine gearbox, a generator and/or a converter of a wind turbine by means of an external liquid cooler having a first liquid cooler part and a second liquid cooler part with different cooling capacities.

It should be noted that in this context the term "antifreeze-containing liquid" should be understood as any liquid containing some form of antifreeze, where antifreeze is to be understood as an additive which lowers the freezing point of a water-based liquid. An antifreeze mixture is used to achieve freezing-point depression for cold environments. Common antifreezes also increase the boiling point of the liquid, allowing higher coolant temperature. The term "antifreeze-containing liquid" thus includes any kind of water-based liquid containing methanol, ethanol, glycerol (such as ethylene glycol or propylene glycol) and/or another antifreeze agent.

In an aspect of the invention, the liquid cooler is arranged outside the nacelle.

Locating the liquid cooler outside the nacelle is advantageous in that this enables easy access to the air ambient to the nacelle and it ensures that the liquid cooler does not take up valuable space in the nacelle.

The invention also provides for a method for cooling a liquid flowing through a wind turbine gearbox, a generator and/or a converter arranged inside a nacelle of a wind turbine, by way of a liquid cooler arranged to cool the liquid by way of air ambient to the nacelle. The method comprising the steps of:
- guiding liquid through a first liquid cooler part of the liquid cooler, the first liquid cooler part having a first part cooling capacity,
- guiding liquid exiting the first liquid cooler part to a second liquid cooler part of the liquid cooler, the second liquid cooler part having a second part cooling capacity, wherein the second part cooling capacity is greater than the first part cooling capacity, and wherein the first liquid cooler part and the second liquid cooler part are formed as a single contiguous unit,
- controlling flow through a bypass conduit by way of valve means based on at least one characteristic of the liquid flowing through the liquid cooler, wherein the bypass conduit is guiding at least a part of the liquid exiting the first liquid cooler part past the second liquid cooler part, and
- guiding at least a part of the liquid exiting the first liquid cooler part through a bypass conduit and past the second liquid cooler part, wherein flow through the bypass conduit is controlled by valve means based on at least one characteristic of the liquid flowing through the liquid cooler.

Forming the liquid cooler so that the liquid to be cooled is first guided through a first liquid cooler part having a relatively low cooling capacity and through the bypass conduit past the second liquid cooler part is advantageous in that the liquid cooler is hereby capable of cooling the liquid sufficiently even in very low ambient temperatures without risking that the liquid clogs the liquid cooler or is cooled too much. And by guiding the liquid also through the second liquid cooler part - having a relatively higher cooling capacity - it is ensured that the liquid cooler is capable of cooling the liquid sufficiently even in high ambient temperatures. And by controlling flow through the bypass conduit by means of valve means based on at least one characteristic of the liquid, the most efficient cooling of the liquid is achieved without risking clogging of the liquid cooler or cooling the liquid too much, in that the valve means can be arranged to enable flow based on liquid temperature, liquid pressure and/or other. Hereby is also ensured that the cooling capacity of the first liquid cooler part is utilised at high ambient temperatures to enable a cost-efficient method.

In an aspect of the invention, the flow through the bypass conduit is controlled based on a temperature of the liquid.

Operating the liquid cooler so that the flow through the bypass conduit is controlled by the valve means based on the temperature of the liquid is advantageous in that it hereby is possible to guide at least some of the liquid through the bypass conduit if the temperature of the liquid is below a certain predefined level after having passed through the first liquid cooler part. Hereby the overall efficiency of the liquid cooler is increased.

In an aspect of the invention, the flow through the bypass conduit is controlled based on a pressure of the liquid.

Operating the liquid cooler so that the flow through the bypass conduit is controlled by the valve means based on the pressure of the liquid is advantageous in that it hereby is possible to guide at least some of the liquid through the bypass conduit if the pressure of the liquid at or near the entrance of the second liquid cooler part is above a certain predefined level. Hereby the overall efficiency of the liquid cooler is increased.

In an aspect of the invention, the flow through the bypass conduit is controlled based on a viscosity of the liquid.

Operating the liquid cooler so that the flow through the bypass conduit is controlled by the valve means based on the viscosity of the liquid is advantageous in that it hereby is possible to guide at least some of the liquid through the bypass conduit if the viscosity of the liquid at or near the entrance of the second liquid cooler part is above a certain predefined level. Hereby the overall efficiency of the liquid cooler is increased.

The valve means can enable flow through the bypass conduit if a pressure inside the liquid cooler is between 1.2 - 30 Bar, preferably between 1.4 - 20 Bar, and most preferred between 1.6 - 10 Bar.

If the pressure at which the valve means will enable flow through the bypass conduit is too low, the liquid is not sufficiently cooled and if the pressure is too high the liquid is cooled too much and the liquid risks clogging the liquid cooler. Thus, the present pressure limits present advantageous limits in relation to efficiency of the cooler.

In an aspect of the invention, the liquid cooler is passively cooled.

Passively cooling the liquid - i.e. by allowing unforced air to flow freely through the cooler to exchange heat with the liquid without the air being forced by a fan, ventilator or similar - is advantageous in that this enables a simple and inexpensive cooling process.

In an aspect of the invention, the previously discussed method is for cooling liquid by way of a liquid cooler according to any of the previously discussed liquid coolers.

Hereby is achieved an advantageous embodiment of the invention.

### Figures

The invention will be described in the following with reference to the figures in which
- fig. 1: illustrates a large modern wind turbine as known in the art,
- fig. 2: illustrates a simplified cross section of a nacelle comprising a liquid cooler, as seen from the side,
- fig. 3: illustrates a liquid cooler with liquid flowing through the first and second liquid cooler parts, as seen from the front,
- fig. 4: illustrates a liquid cooler with liquid flowing through the first and second liquid cooler parts and a bypass conduit, as seen from the front,
- fig. 5: illustrates a liquid cooler with liquid flowing through the first liquid cooler part and a bypass conduit, as seen from the front,
- fig. 6: illustrates a liquid cooler with a motor actuated valve, as seen from the front,
- fig. 7: illustrates a liquid cooler with a pilot pressure actuated valve, as seen from the front, and
- fig. 8: illustrates cooling channels of a liquid cooler, as seen from the front,
- fig. 9: illustrates a liquid cooler with liquid flowing in opposite directions through the liquid cooler parts, as seen from the front, and
- fig. 10: illustrates the liquid cooler of fig. 9 with liquid bypassing the second liquid cooler part, as seen from the front.

### Detailed description of related art

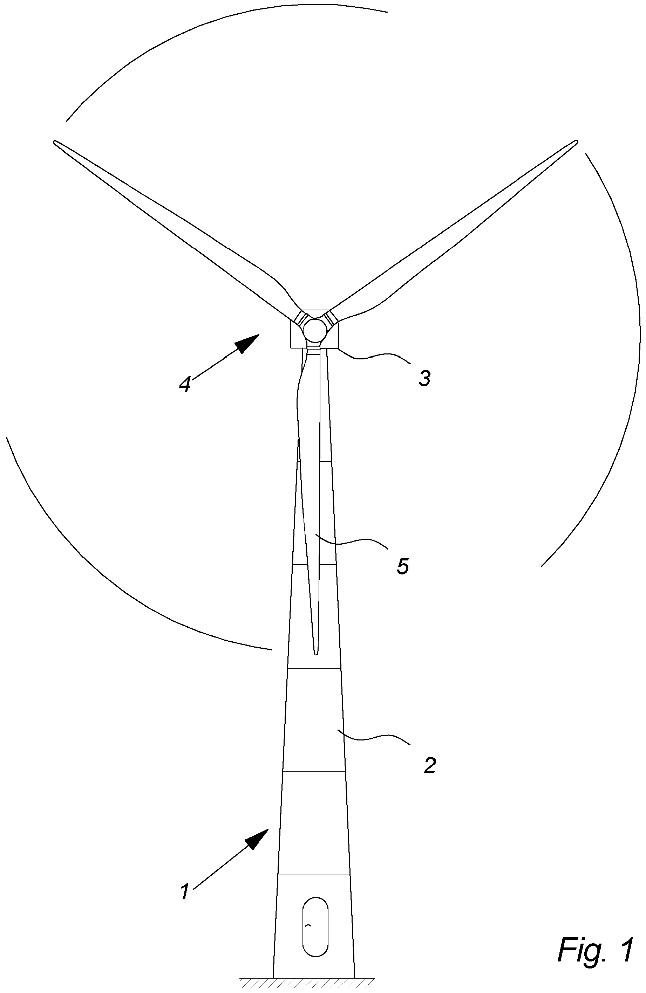

Fig. 1 illustrates a large modern wind turbine 1 as known in the art, comprising a tower 2 and a wind turbine nacelle 3 positioned on top of the tower 2. The wind turbine rotor 4 comprises three wind turbine blades 5 mounted on a common hub which is connected to the nacelle 3 through the low speed shaft extending out of the nacelle 3 front. In another embodiment the wind turbine rotor 4 could comprise another number of blades 5 such as one, two, four, five or more.

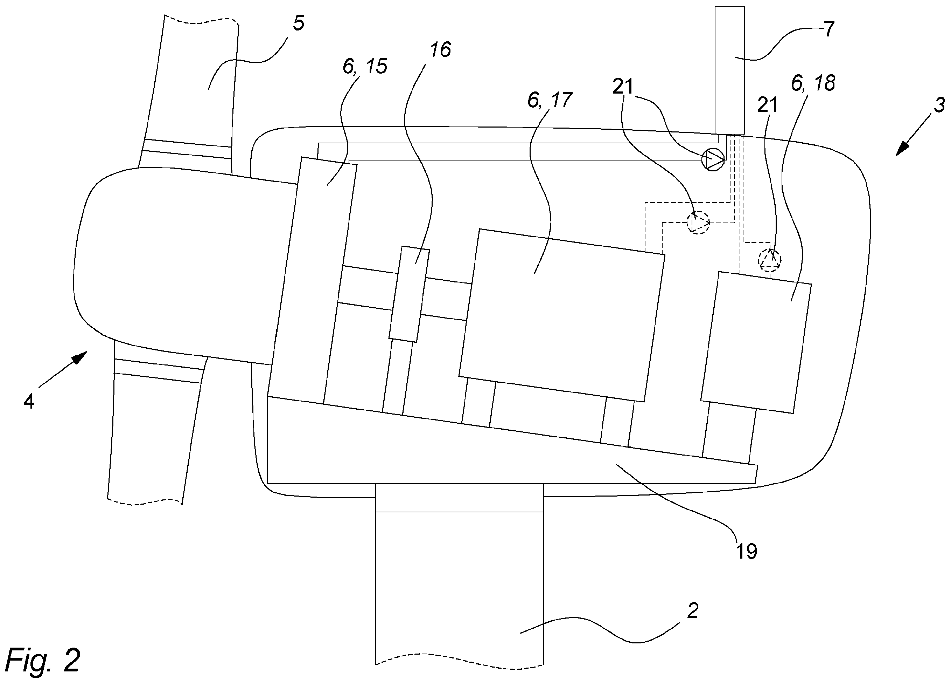

Fig. 2 illustrates a simplified cross section of a nacelle 3 of a wind turbine 1, as seen from the side. Nacelles 3 exist in a multitude of variations and configurations but in most cases the drive train in the nacelle 3 almost always comprises one or more of the following components: a gearbox 15, a coupling (not shown), some sort of breaking system 16 and a generator 17. A nacelle 3 of a modern wind turbine 1 can also include a converter 18 (also called an inverter) and additional peripheral equipment such as further power handling equipment, control cabinets, hydraulic systems, and more.

The weight of the entire nacelle 3 including the nacelle components 15, 16, 17, 18 is in this embodiment carried by a nacelle structure 19. The components 15, 16, 17, 18 are usually placed on and/or connected to this common load carrying nacelle structure 19.

Most of the components in the nacelle 3 are heat generating components 6 in that they are electrically and/or mechanically active at least at some time during idling or normal operation of the wind turbine 1. In this embodiment the heat generating components 6 are the gearbox 15, generator 17, electrical power handling equipment such as the converter 18 and control cabinets (not shown) but in another embodiment the heat generating components 6 could further include bearings, lubrication systems, yaw or pitch motors and other motors.

In this embodiment the gearbox oil is cooled by a cooling circuit comprising a liquid cooler 7 - to be discussed in detail in the following - placed outside on top of the nacelle 3 so that the air may flow freely through the liquid cooler 7 to passively cool the oil flowing through the liquid cooler 7. However, in another embodiment the system could also comprise a fan located in front of the liquid cooler 7 to actively cool the liquid cooler 7. Also, in another embodiment the liquid cooler 7 could be partly or entirely placed inside the nacelle 3 so that ambient air would be guided through the liquid cooler 7 inside the nacelle 3. The wind turbine 1 is provided with a yaw arrangement ensuring that the rotor 4 is always facing the wind during normal operation of the wind turbine 1 and by placing the liquid cooler 7 outside the nacelle 3 facing the rotor 4, the liquid cooler will also always be facing the wind, thus ensuring efficient cooling of the liquid cooler 7. In this embodiment the circuit further comprises a pump 21 for circulating the liquid in the cooling circuit between the liquid cooler 7 and the gearbox 15.

In another embodiment the liquid cooler 7 could also or instead be used for cooling insulating oil in the generator 17, the converter 18, in a transformer (not shown) or other electrical power handling equipment or heat generating equipment in the wind turbine 1 or the liquid cooler 7 could be used for other oil cooling purposes such as cooling motor oil in a combustion engine, for cooling oil in gearboxes used for other purposes or in relation to any other system where cooling of oil is needed.

However, in another embodiment - as shown by the dotted lines - the antifreeze-containing liquid used for cooling the generator 17 and/or the converter 18 is also or instead cooled by leading the antifreeze-containing liquid from the generator 17 and/or the converter 18 to and trough the liquid cooler 7 placed outside on top of the nacelle 3 before the now cooled antifreeze-containing liquid returns to the generator 17 and/or the converter 18 by means of separate closed cooling circuits. However, in another embodiment the cooling circuits of the generator 17 and the converter 18 could be joined to form a single cooling circuit.

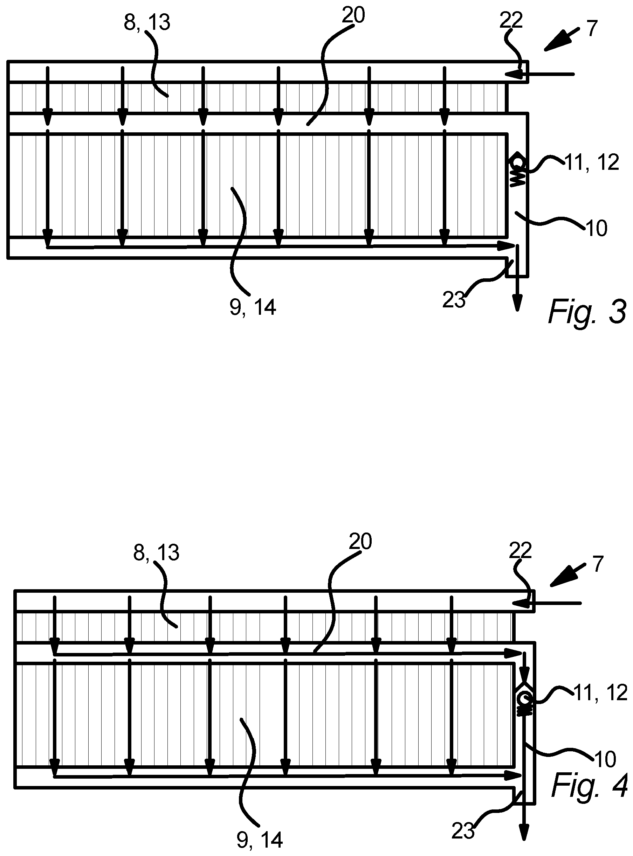

Fig. 3 illustrates a liquid cooler 7 with liquid flowing through the first and second liquid cooler parts 8, 9, as seen from the front. The liquid flow path is illustrated by the arrows.

In this embodiment the liquid cooler 7 comprises a first liquid cooler part 8 and a second liquid cooler part 9 arranged on top of each other and separated by a common liquid conduit 20. I.e. in this embodiment the liquid enters the liquid cooler 7 through a liquid inlet 22 from where it flows down through the first part cooling channels 13 of the first liquid cooler part 8 down to the common liquid conduit 20 from where it flows down through second part cooling channels 14 of the second liquid cooler part 9 until it finally exits the liquid cooler 7 through a liquid outlet 23. I.e. in this embodiment the liquid is arranged to flow down through the liquid cooler 7 during normal operation but in another embodiment the liquid cooler 7 could be arranged to make the liquid flow upwards, sideways, in any other direction or any combination thereof through the first liquid cooler part 8 and/or the second liquid cooler part 9 during normal operation of the liquid cooler 7.

In this embodiment the common liquid conduit 20 is an integrated chamber formed between the exit of the first liquid cooler part 8 and the entrance of second liquid cooler part 9 but in another embodiment the common liquid conduit 20 could be formed differently by e.g., comprising a liquid reservoir (not shown), by being formed by one or more hoses or tubes or other.

In this embodiment the first part cooling channels 13 has a first part cooling capacity and the second liquid cooler part 9 has a second part cooling capacity and in this embodiment the second part cooling capacity is greater than the first part cooling capacity in that the second part cooling channels 14 are substantially longer than the first part cooling channels 13. Given that the number of first part cooling channels 13 and second part cooling channels 14 is the same and the first part cooling channels 13 and second part cooling channels 14 are identical in design (same cross-sectional area, same turbulator design etc.) the second part cooling capacity is approximately 3.5 times greater than the first part cooling capacity, in that the second part cooling channels 14 are substantially 3.5 times longer than the first part cooling channels 13. I.e., in this embodiment the effective cooling area of the first liquid cooler part 8 is approximately 3.5 times smaller than the effective cooling area of the second liquid cooler part 9. However, in another embodiment the second part cooling capacity and/or the effective cooling area of the second liquid cooler part 9 would only be 1.1, 1.5, 2, 2.5, or 3 times greater than the first part cooling capacity and/or effective cooling area of the first liquid cooler part 8. Or the second part cooling capacity and/or the effective cooling area of the second liquid cooler part 9 would be 4, 5, 6, 7 or 10 times greater than the first part cooling capacity and/or effective cooling area of the first liquid cooler part 8 e.g., depending on the specific liquid to be cooled, the specific use and/or location of the liquid cooler, or other considerations. However, as will be discussed in the following the relatively larger cooling capacity of the second liquid cooler part 9 in relation to the first liquid cooler part 8 can also or instead be obtained by other means.

In this embodiment the liquid cooler 7 is also provided with a bypass conduit 10 arranged to guide liquid exiting the first liquid cooler part 8 past the second liquid cooler part 9 under certain circumstances to be discussed in the following. In this embodiment the bypass conduit 10 is fluidly connected to the common liquid conduit 20 but in another embodiment the liquid cooler 7 would be formed without a common liquid conduit 20 and the bypass conduit 10 could then be connected directly to the exit of the first liquid cooler part 8, to the entrance of the second liquid cooler part 9 or another location between the first liquid cooler part 8 and the second liquid cooler part 9 e.g. by means of one or more hoses or tubes.

In this embodiment the valve means 11, in the form of a spring-loaded check valve 12, is arranged in the bypass conduit 10 to control flow through the bypass conduit 10. In this embodiment the spring-loaded check valve 12 is provided with a predefined setting so that the spring-loaded check valve 12 will start opening if the pressure in front of the valve means 11 exceeds 2 Bar. Thus, if the pressure pressure drop across the second liquid cooler part 9 is higher than 2 Bar, the spring-loaded check valve 12 will open and allow flow of liquid through the bypass conduit 10 and directly down to the liquid outlet 23 past the second liquid cooler part 9. However, in another embodiment the valve means 11 could be arranged to start opening when the pressure is lower, such as when the pressure exceeds 1.8, 1.5, 1.3 Bar or even lower or the valve means 11 could be arranged to start opening when the pressure is higher, such as when the pressure exceeds 3, 5, 7, 10 Bar or even higher. Thus, in this embodiment the valve means 11 are controlled based on one characteristic of liquid flowing through the liquid cooler 7 in the form of the liquid pressure in front of the valve means 11. However, in another embodiment the characteristic of liquid flowing through the liquid cooler 7 based on which the valve means 11 are controlled could also or instead include a liquid temperature, a liquid viscosity, flow speed of the liquid through the first liquid cooler part 8 and/or other.

Fig. 4 illustrates a liquid cooler 7 with liquid flowing through the first and second liquid cooler parts 8, 9 and a bypass conduit 10, as seen from the front.

In this embodiment the characteristic of liquid flowing through the liquid cooler 7 has changed in relation to the embodiment disclosed in fig. 3 so that the valve means 11 has opened and allowed at least some of the liquid to run through the bypass conduit 10. I.e., in this embodiment the ambient temperature has dropped and/or the wind speed has increased so that the viscosity of the liquid running through the second liquid cooler parts 9 has also increased whereby the pressure in front of the valve means 11 has increased to push the valve means 11 open.

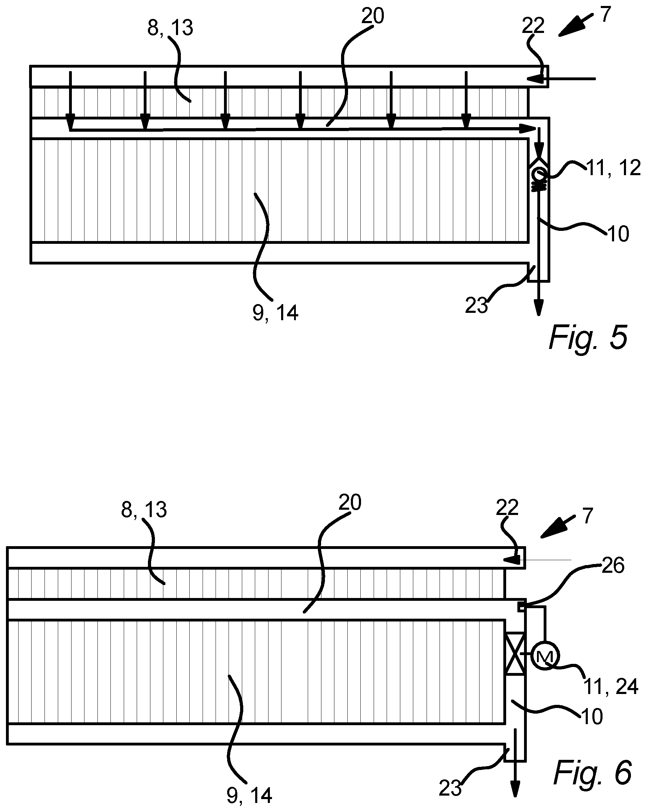

Fig. 5 illustrates a liquid cooler 7 with liquid flowing through the first liquid cooler part 8 and a bypass conduit 10, as seen from the front.

In this embodiment the ambient temperature has dropped even further and/or the wind speed has increased even further so that the viscosity of the liquid after having passed through the first liquid cooler part 8 has increased so much that it cannot pass through the cooling channels 14 of the second liquid cooler parts 9 or at least so much that the liquid will flow more freely through the bypass conduit 10. The pressure in front of the valve means 11 has therefore increased considerably to push the valve means 11 fully open. And since the cross-sectional area of the bypass conduit 10 is considerably bigger than the cross-sectional area of each of the second part cooling channels 11 of the second liquid cooler part 9 the liquid can still flow through the bypass conduit 10 and out of the liquid cooler 7 through the liquid outlet 23 even though the liquid is very viscous.

Fig. 6 illustrates a liquid cooler 7 with a motor actuated valve 24, as seen from the front.

In this embodiment the valve means 11 are formed as a motor actuated valve 24 operating according to input from a sensor 26, which in this case is located at the end of the bypass conduit 10. However, in another embodiment the valve means 11 could be connected to more than one sensors 26 - such as two, three, four or even more - and/or the sensor 26 could be located differently in the liquid cooler 7 - such as another location in the bypass conduit 10, it could be integrated with the valve means 11, it could be located in the first liquid cooler part 8 or in the second liquid cooler parts 9 or another location.

In this embodiment the sensor 26 is a pressure sensor but in another embodiment the sensor 26 could also or instead be a temperature sensor, a viscosity sensor, a flow speed sensor or other.

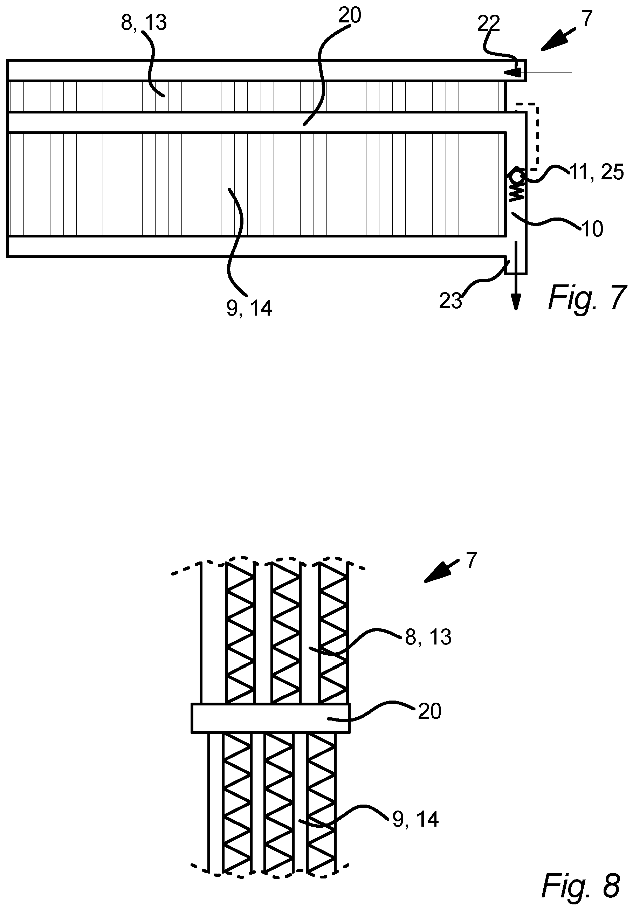

Fig. 7 illustrates a liquid cooler 7 with a pilot pressure actuated valve 25, as seen from the front.

In this embodiment the valve means 11 are formed as a pilot pressure actuated valve 25 so that the valve means 11 is operated in response to a pilot pressure at the end of the bypass conduit 10. However, in another embodiment the pilot pressure line could be connected to another place in the liquid cooler 7 - such as another place in the bypass conduit 10, right in front of the valve means 11, it could be located in the first liquid cooler part 8 or in the second liquid cooler parts 9 or another location.

However, in another embodiment the valve means 11 could also be formed as a thermo actuated valve (not shown) or another type of valve suited for enabling flow through the bypass conduit 10 in response to at least one characteristic of the liquid flowing through the liquid cooler 7.

In all the embodiments disclosed in figs. 3-7 the first liquid cooler part 8, the common liquid conduit 20, the bypass conduit 10, and the second liquid cooler part 9 are formed as a single contiguous and coherent unit in that all the parts are interconnected to form a single unit that can easily be moved around and mounted and/or enabling that the liquid cooler 7 easily can replace an existing single-capacity cooler in an existing wind turbine 1. However, in another embodiment the bypass conduit 10 could also or instead be formed as a pipe or a hose guiding the bypass liquid directly to a liquid reservoir (not shown), to the liquid outlet 23 or other and/or the first liquid cooler part 8 and the second liquid cooler part 9 could be arranged separate from each other and then be connected by the common liquid conduit 20 which in turn could at least partly be formed by a pipe or a hose.

Fig. 8 illustrates cooling channels 13, 14 of a liquid cooler 7, as seen from the front. Note, that fig. 8 only discloses a cut out portion of the liquid cooler 7.

In this embodiment the second part cooling capacity is greater than the first part cooling capacity in that the smallest cross-sectional area of first part cooling channels 13 of the first liquid cooler part 8 is bigger than the smallest cross-sectional area of second part cooling channels 14 of the second liquid cooler part 9 whereby the pressure drop across the first liquid cooler part 8 is considerably lower than the pressure drop across the second liquid cooler part 9 even if the flow capacity of the first liquid cooler part 8 is the same as the flow capacity of the second liquid cooler part 9. However, in another embodiment the first part cooling channels 13 and/or the second part cooling channels 14 could also or instead be provided with internal turbulators (not shown) that will turn laminar flow into turbulent flow and thereby also increase the heat exchange with the passing air outside the cooling channels 13, 14. Thus, by only providing turbulators in the second part cooling channels 14, the second part cooling capacity can be greater than the first part cooling capacity without otherwise changing the design of the cooling channels 13, 14. And/or turbulators in the first part cooling channels 13 could be formed different from the turbulators in the second part cooling channels 14 e.g. by forming the turbulators in the first part cooling channels 13 thinner or having a larger pitch or other which would reduce the pressure drop through the first liquid cooler part 8 compared to the second liquid cooler part 9. And/or the difference in cooling capacity could be enabled through differences in the heat sink design on the outside of the cooling channels 13, 14.

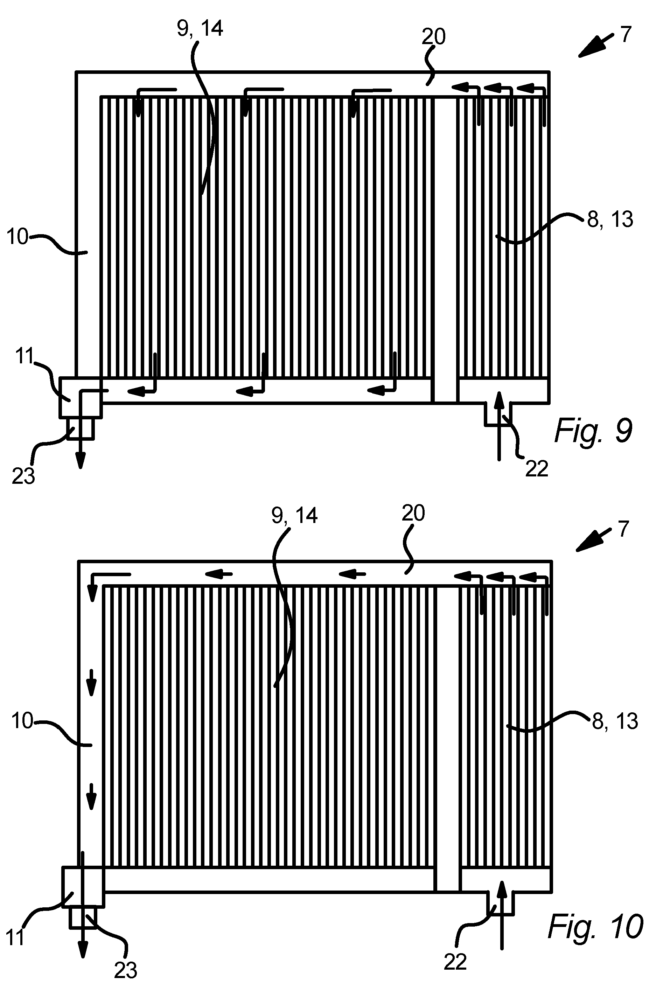

Fig. 9 illustrates a liquid cooler 7 with liquid flowing in opposite directions through the first liquid cooler part 8 and the second liquid cooler part 9, as seen from the front.

In this embodiment the liquid enters the liquid cooler 7 through the liquid inlet 22 from which it is distributed and flows up through the first liquid cooler part 8 and into a liquid conduit 20 arranged at the top of the liquid cooler 7. Via the liquid conduit 20 the liquid is guided to the second liquid cooler part 9 and in this embodiment the liquid flows down through the second liquid cooler part 9 because valve means 11 - in this embodiment in the form a thermo-actuated valve - are open to flow from the bottom of the second liquid cooler part 9 and out through the liquid outlet 23 while at the same time the valve means 11 will block passage from the bypass conduit 10 to the liquid outlet 23 - thus, forcing the liquid through the second liquid cooler part 9. I.e., in this embodiment the full cooling capacity of the liquid cooler 7 is used.

In this embodiment the first liquid cooler part 8 is separate from the second liquid cooler part 9 although the two cooler part 8, 9 are still joined to form a single unit that can be transported, handled and installed as a single unit and in this embodiment the valve means 11 are also part of the unit so that the liquid cooler 7 can easily replace an existing single-capacity liquid cooler in a wind turbine. In this embodiment the liquid is flowing in opposite directions through the first liquid cooler part 8 and the second liquid cooler part 9 but in another embodiment further conduits could enable flow in the same direction through the two cooler parts 8, 9.

Fig. 10 illustrates the liquid cooler 7 of fig. 9 with liquid bypassing the second liquid cooler part 9, as seen from the front.

In this embodiment the valve means 11 have detected that the temperature of the liquid flowing through the valve means 11 has dropped below a predefined level and the valve means 11 have therefore closed liquid passage between the second liquid cooler part 9 and the liquid outlet 23, and instead opened liquid passage between the bypass conduit 10 and the liquid outlet 23 so that the liquid is guided past the second liquid cooler part 9, through the second liquid cooler part 9 and out of the liquid cooler 7 through the liquid outlet 23. I.e., in this embodiment only around 18% of the liquid coolers 7 full cooling capacity is utilized.

The invention has been exemplified above with reference to specific examples of first and second liquid cooler parts 8, 9, valve means 11, cooling channels 13, 14 and other. However, it should be understood that the invention is not limited to the particular examples described above but may be designed and altered in a multitude of varieties within the scope of the invention as specified in the claims.

### List

- 1.: Wind turbine
- 2.: Tower
- 3.: Nacelle
- 4.: Rotor
- 5.: Blade
- 6.: Heat generating component
- 7.: Liquid cooler
- 8.: First liquid cooler part
- 9.: Second liquid cooler part
- 10.: Bypass conduit
- 11.: Valve means
- 12.: Spring-loaded valve
- 13.: First part cooling channels
- 14.: Second part cooling channels
- 15.: Gearbox
- 16.: Braking system
- 17.: Generator
- 18.: Converter
- 19.: Nacelle structure
- 20.: Liquid conduit
- 21.: Pump
- 22.: Liquid inlet
- 23.: Liquid outlet
- 24.: Motor actuated valve
- 25.: Pilot pressure actuated valve
- 26.: Sensor

## Claims

1. A wind turbine (1) comprising a wind turbine gearbox (15), a generator (17) and/or a converter (18) arranged inside a nacelle (3) of said wind turbine (1), said wind turbine (1) further comprises a liquid cooler (7) arranged to cool a liquid flowing through said wind turbine gearbox (15), said generator (17) and/or said converter (18) by way of air ambient to said nacelle (3), wherein said liquid cooler (7) comprises
a first liquid cooler part (8) having a first part cooling capacity,
a second liquid cooler part (9) having a second part cooling capacity, wherein said second part cooling capacity is greater than said first part cooling capacity,
a bypass conduit (10) arranged to guide a liquid from said first liquid cooler part (8) past said second liquid cooler part (9), and
valve means (11) arranged to control flow through said bypass conduit (10), wherein said valve means (11) are controlled based on at least one characteristic of said liquid flowing through said liquid cooler (7), **characterised in that** said first liquid cooler part (8) and said second liquid cooler part (9) are formed as a single contiguous unit.

2. A wind turbine (1) according to claim 1, wherein said valve means (11) comprise a spring-loaded valve (12), a motor actuated valve (24), a thermo-actuated valve or a pilot pressure actuated valve (25).

3. A wind turbine (1) according to any of the preceding claims, wherein said characteristic of said liquid flowing through said liquid cooler (7) includes a temperature of said liquid,
wherein said characteristic of said liquid flowing through said liquid cooler (7) includes a pressure of said liquid, or
wherein said characteristic of said liquid flowing through said liquid cooler (7) includes a viscosity of said liquid.

4. A wind turbine (1) according to any of the preceding claims, wherein said valve means (11) are arranged to enable flow through said bypass conduit (10) if a pressure inside said liquid cooler (7) is between 1.2 - 30 Bar, preferably between 1.4 - 20 Bar, and most preferred between 1.6 - 10 Bar.

5. A wind turbine (1) according to any of the preceding claims, wherein said second part cooling capacity is greater than said first part cooling capacity in that first part cooling channels (13) through said first liquid cooler part (8) are shorter than second part cooling channels (14) through said second liquid cooler part (9),
wherein said second part cooling capacity is greater than said first part cooling capacity in that the smallest cross-sectional area of first part cooling channels (13) of said first liquid cooler part (8) is bigger than the smallest cross-sectional area of second part cooling channels (14) of said second liquid cooler part (9), or
wherein said second part cooling capacity is greater than said first part cooling capacity in that the effective cooling area of said first liquid cooler part (8) is smaller than the effective cooling area of said second liquid cooler part (9).

6. wind turbine (1) according to any of the preceding claims, wherein said first liquid cooler part (8) and said second liquid cooler part (9) are connected by a common liquid conduit (20) arranged so that liquid flowing through said first liquid cooler part (8) is exciting in said common liquid conduit (20) and so that liquid entering said second liquid cooler part (9) is entering from said common liquid conduit (20).

7. A wind turbine (1) according to claim 6, wherein said bypass conduit (10) is fluidly connected to said common liquid conduit (20).

8. A wind turbine (1) according to any of the preceding claims, wherein the smallest cross-sectional area of said bypass conduit (10) is greater than the smallest cross-sectional area of second part cooling channels (14) of said second liquid cooler part (9).

9. A wind turbine (1) according to any of the preceding claims, wherein said liquid is oil or an antifreeze-containing liquid.

10. A wind turbine (1) according to any of the preceding claims, wherein said liquid cooler (7) is arranged outside said nacelle (3).

11. A method for cooling a liquid flowing through a wind turbine gearbox (15), a generator (17) and/or a converter (18) arranged inside a nacelle (3) of a wind turbine (1), by way of a liquid cooler (7) arranged to cool said liquid by way of air ambient to said nacelle (3), said method comprising the steps of:
• guiding liquid through a first liquid cooler part (8) of said liquid cooler (7), said first liquid cooler part (8) having a first part cooling capacity,
• guiding liquid exiting said first liquid cooler part (8) to a second liquid cooler part (9) of said liquid cooler (7), said second liquid cooler part (9) having a second part cooling capacity, wherein said second part cooling capacity is greater than said first part cooling capacity, and wherein said first liquid cooler part (8) and said second liquid cooler part (9) are formed as a single contiguous unit,
• controlling flow through a bypass conduit (10) by way of valve means (11) based on at least one characteristic of said liquid flowing through said liquid cooler (7), wherein said bypass conduit (10) is guiding at least a part of said liquid exiting the first liquid cooler part (8) past said second liquid cooler part (9), and
• guiding at least a part of said liquid exiting said first liquid cooler part (8) through a bypass conduit (10) and past said second liquid cooler part (9), wherein flow through said bypass conduit (10) is controlled by valve means (11) based on at least one characteristic of said liquid flowing through said liquid cooler (7).

12. A method according to claim 11, wherein flow through said bypass conduit (10) is controlled based on a temperature of said liquid, wherein flow through said bypass conduit (10) is controlled based on a pressure of said liquid, or wherein flow through said bypass conduit (10) is controlled based on a viscosity of said liquid.

13. A method according to claim 11 or 12, wherein said liquid cooler is passively cooled.

14. A method according to any of claims 11-13, for cooling liquid by way of a liquid cooler (7) according to any of claims 1 to 10.

## Patentansprüche

1. Windkraftanlage (1), umfassend ein Windkraftanlagengetriebe (15), einen Generator (17) und/oder einen Umrichter (18), die in einer Gondel (3) der Windkraftanlage (1) angeordnet sind, wobei die Windkraftanlage (1) ferner einen Flüssigkeitskühler (7), der angeordnet ist, um eine Flüssigkeit, die durch das Windkraftanlagengetriebe (15), den Generator (17) und/oder den Umrichter (18) fließt, mittels Luft, die die Gondel (3) umgibt, zu kühlen, umfasst, wobei der Flüssigkeitskühler (7) umfasst
ein erstes Flüssigkeitskühlerteil (8), das eine Erstteilkühlkapazität aufweist,
ein zweites Flüssigkeitskühlerteil (9), das eine Zweitteilkühlkapazität aufweist, wobei die Zweitteilkühlkapazität größer als die Erstteilkühlkapazität ist,
eine Bypass-Leitung (10), die angeordnet ist, um eine Flüssigkeit von dem ersten Flüssigkeitskühlerteil (8) an dem zweiten Flüssigkeitskühlerteil (9) vorbeizuleiten, und
Ventilmittel (11), die angeordnet sind, um einen Fluss durch die Bypass-Leitung (10) zu steuern,
wobei die Ventilmittel (11) basierend auf mindestens einem Merkmal der Flüssigkeit, die durch den Flüssigkeitskühler (7) fließt, gesteuert werden,
**dadurch gekennzeichnet, dass** das erste Flüssigkeitskühlerteil (8) und das zweite Flüssigkeitskühlerteil (9) als eine einzige zusammenhängende Einheit ausgebildet sind.

2. Windkraftanlage (1) nach Anspruch 1, wobei die Ventilmittel (11) ein federbelastetes Ventil (12), ein motorbetätigtes Ventil (24), ein thermobetätigtes Ventil oder ein steuerdruckbetätigtes Ventil (25) umfassen.

3. Windkraftanlage (1) nach einem der vorstehenden Ansprüche, wobei das Merkmal der Flüssigkeit, die durch den Flüssigkeitskühler (7) fließt, eine Temperatur der Flüssigkeit einschließt,
wobei das Merkmal der Flüssigkeit, die durch den Flüssigkeitskühler (7) fließt, einen Druck der Flüssigkeit einschließt, oder
wobei das Merkmal der Flüssigkeit, die durch den Flüssigkeitskühler (7) fließt, eine Viskosität der Flüssigkeit einschließt.

4. Windkraftanlage (1) nach einem der vorstehenden Ansprüche, wobei die Ventilmittel (11) angeordnet sind, um den Fluss durch die Bypass-Leitung (10) zu ermöglichen, falls ein Druck in dem Flüssigkeitskühler (7) zwischen 1,2 - 30 bar, vorzugsweise zwischen 1,4 - 20 bar, und am meisten bevorzugt zwischen 1,6 - 10 bar, liegt.

5. Windkraftanlage (1) nach einem der vorstehenden Ansprüche, wobei die Zweitteilkühlkapazität größer als die Erstteilkühlkapazität ist, dadurch dass Erstteilkühlkanäle (13) durch das erste Flüssigkeitskühlerteil (8) kürzer als Zweitteilkühlkanäle (14) durch das zweite Flüssigkeitskühlerteil (9) sind,
wobei die Zweitteilkühlkapazität größer als die Erstteilkühlkapazität ist, dadurch dass die kleinste Querschnittsfläche von Erstteilkühlkanälen (13) des ersten Flüssigkeitskühlerteils (8) größer als die kleinste Querschnittsfläche von Zweitteilkühlkanälen (14) des zweiten Flüssigkeitskühlerteils (9) ist, oder
wobei die Zweitteilkühlkapazität größer als die Erstteilkühlkapazität ist, dadurch, dass die effektive Kühlfläche des ersten Flüssigkeitskühlerteils (8) kleiner als die effektive Kühlfläche des zweiten Flüssigkeitskühlerteils (9) ist.

6. Windkraftanlage (1) nach einem der vorstehenden Ansprüche, wobei das erste Flüssigkeitskühlerteil (8) und der zweite Flüssigkeitskühlerteil (9) durch eine gemeinsame Flüssigkeitsleitung (20), die angeordnet ist, sodass Flüssigkeit, die durch das erste Flüssigkeitskühlerteil (8) fließt, in die gemeinsame Flüssigkeitsleitung (20) angeregt ist und sodass Flüssigkeit, die in das zweite Flüssigkeitskühlerteil (9) eintritt, aus der gemeinsamen Flüssigkeitsleitung (20) eintritt, verbunden sind.

7. Windkraftanlage (1) nach Anspruch 6, wobei die Bypass-Leitung (10) mit der gemeinsamen Flüssigkeitsleitung (20) fluidisch verbunden ist.

8. Windkraftanlage (1) nach einem der vorstehenden Ansprüche, wobei die kleinste Querschnittsfläche der Bypass-Leitung (10) größer als die kleinste Querschnittsfläche von Zweitteilkühlkanälen (14) des zweiten Flüssigkeitskühlerteils (9) ist.

9. Windkraftanlage (1) nach einem der vorstehenden Ansprüche, wobei die Flüssigkeit Öl oder eine frostschutzmittelhaltige Flüssigkeit ist.

10. Windkraftanlage (1) nach einem der vorstehenden Ansprüche, wobei der Flüssigkeitskühler (7) außerhalb der Gondel (3) angeordnet ist.

11. Verfahren zum Kühlen einer Flüssigkeit, die durch ein Windkraftanlagengetriebe (15), einen Generator (17) und/oder einen Umrichter (18), die in einer Gondel (3) einer Windkraftanlage (1) angeordnet sind, fließt, mittels eines Flüssigkeitskühlers (7), der angeordnet ist, um die Flüssigkeit mittels Luft, die die Gondel (3) umgibt, zu kühlen, das Verfahren umfassend die Schritte:
• Leiten von Flüssigkeit durch ein erstes Flüssigkeitskühlerteil (8) des Flüssigkeitskühlers (7), wobei das erste Flüssigkeitskühlerteil (8) eine Erstteilkühlkapazität aufweist,
• Leiten von Flüssigkeit, die aus dem ersten Flüssigkeitskühlerteil (8) austritt, zu einem zweiten Flüssigkeitskühlerteil (9) des Flüssigkeitkühlers (7), wobei das zweite Flüssigkeitskühlerteil (9) eine Zweitteilkühlkapazität aufweist, wobei die Zweitteilkühlkapazität größer als die Erstteilkühlkapazität ist, und wobei das erste Flüssigkeitskühlerteil (8) und das zweite Flüssigkeitskühlerteil (9) als eine einzige zusammenhängende Einheit ausgebildet sind,
• Steuern von Fluss durch eine Bypass-Leitung (10) mittels Ventilmitteln (11) basierend auf mindestens einem Merkmal der Flüssigkeit, die durch den Flüssigkeitskühler (7) fließt, wobei die Bypass-Leitung (10) mindestens einen Teil der Flüssigkeit, die aus dem ersten Flüssigkeitskühlerteil (8) austritt, an dem zweiten Flüssigkeitskühlerteil (9) vorbei leitet, und
• Leiten mindestens eines Teils der Flüssigkeit, die aus dem ersten Flüssigkeitskühlerteil (8) austritt, durch eine Bypass-Leitung (10) und an dem zweiten Flüssigkeitskühlerteil (9) vorbei, wobei der Fluss durch die Bypass-Leitung (10) durch Ventilmittel (11) basierend auf mindestens einem Merkmal der Flüssigkeit, die durch den Flüssigkeitskühler (7) fließt, gesteuert wird.

12. Verfahren nach Anspruch 11, wobei der Fluss durch die Bypass-Leitung (10) basierend auf einer Temperatur der Flüssigkeit gesteuert wird, wobei der Fluss durch die Bypass-Leitung (10) basierend auf einem Druck der Flüssigkeit gesteuert wird, oder wobei der Fluss durch die Bypass-Leitung (10) basierend auf einer Viskosität der Flüssigkeit gesteuert wird.

13. Verfahren nach Anspruch 11 oder 12, wobei der Flüssigkeitskühler passiv gekühlt wird.

14. Verfahren nach einem der Ansprüche 11 bis 13 zum Kühlen von Flüssigkeit mittels eines Flüssigkeitskühlers (7) nach einem der Ansprüche 1 bis 10.

## Revendications

1. Éolienne (1) comprenant un multiplicateur d'éolienne (15), un générateur (17) et/ou un convertisseur (18) agencés à l'intérieur d'une nacelle (3) de ladite éolienne (1), ladite éolienne (1) comprenant en outre un refroidisseur de liquide (7) agencé pour refroidir un liquide s'écoulant à travers ledit multiplicateur d'éolienne (15), ledit générateur (17) et/ou ledit convertisseur (18) au moyen de l'air ambiant vers ladite nacelle (3), dans laquelle ledit refroidisseur de liquide (7) comprend
une première partie de refroidisseur de liquide (8) ayant une capacité de refroidissement de première partie,
une seconde partie de refroidisseur de liquide (9) ayant une capacité de refroidissement de seconde partie, dans laquelle ladite capacité de refroidissement de seconde partie est supérieure à ladite capacité de refroidissement de première partie,
un conduit de dérivation (10) agencé pour guider un liquide depuis ladite première partie de refroidisseur de liquide (8) au-delà de ladite seconde partie de refroidisseur de liquide (9), et
un moyen de soupape (11) agencé pour réguler l'écoulement à travers ledit conduit de dérivation (10),
dans laquelle ledit moyen de soupape (11) est commandé sur la base d'au moins une caractéristique dudit liquide s'écoulant à travers ledit refroidisseur de liquide (7), **caractérisée en ce que** ladite première partie de refroidisseur de liquide (8) et ladite seconde partie de refroidisseur de liquide (9) sont formées comme une seule unité contiguë.

2. Éolienne (1) selon la revendication 1, dans laquelle ledit moyen de soupape (11) comprend une soupape à ressort (12), une soupape actionnée par moteur (24), une soupape thermo-actionnée ou une soupape actionnée par pression pilote (25).

3. Éolienne (1) selon l'une quelconque des revendications précédentes, dans laquelle ladite caractéristique dudit liquide s'écoulant à travers ledit refroidisseur de liquide (7) comporte une température dudit liquide,
dans laquelle ladite caractéristique dudit liquide s'écoulant à travers ledit refroidisseur de liquide (7) comporte une pression dudit liquide, ou
dans laquelle ladite caractéristique dudit liquide s'écoulant à travers ledit refroidisseur de liquide (7) comporte une viscosité dudit liquide.

4. Éolienne (1) selon l'une quelconque des revendications précédentes, dans laquelle ledit moyen de soupape (11) est agencé pour permettre l'écoulement à travers ledit conduit de dérivation (10) si une pression à l'intérieur dudit refroidisseur de liquide (7) est comprise entre 1,2 et 30 bars, de préférence entre 1,4 et 20 bars, et le plus préférablement entre 1,6 et 10 bars.

5. Éolienne (1) selon l'une quelconque des revendications précédentes, dans laquelle ladite capacité de refroidissement de seconde partie est supérieure à ladite capacité de refroidissement de première partie en ce que des canaux de refroidissement de première partie (13) à travers ladite première partie de refroidisseur de liquide (8) sont plus courts que des canaux de refroidissement de seconde partie (14) à travers ladite seconde partie de refroidisseur de liquide (9),
dans laquelle ladite capacité de refroidissement de seconde partie est supérieure à ladite capacité de refroidissement de première partie en ce que la plus petite aire en section transversale de canaux de refroidissement de première partie (13) de ladite première partie de refroidisseur de liquide (8) est plus grande que la plus petite aire en section transversale de canaux de refroidissement de seconde partie (14) de ladite seconde partie de refroidisseur de liquide (9), ou
dans laquelle ladite capacité de refroidissement de seconde partie est supérieure à ladite capacité de refroidissement de première partie en ce que l'aire de refroidissement effective de ladite première partie de refroidisseur de liquide (8) est plus petite que l'aire de refroidissement effective de ladite seconde partie de refroidisseur de liquide (9).

6. Éolienne (1) selon l'une quelconque des revendications précédentes, dans laquelle ladite première partie de refroidisseur de liquide (8) et ladite seconde partie de refroidisseur de liquide (9) sont reliées par un conduit de liquide commun (20) agencé de sorte que le liquide s'écoulant à travers ladite première partie de refroidisseur de liquide (8) sort dans ledit conduit de liquide commun (20) et de sorte que le liquide entrant dans ladite seconde partie de refroidisseur de liquide (9) entre par ledit conduit de liquide commun (20).

7. Éolienne (1) selon la revendication 6, dans laquelle ledit conduit de dérivation (10) est relié fluidiquement audit conduit de liquide commun (20).

8. Éolienne (1) selon l'une quelconque des revendications précédentes, dans laquelle la plus petite aire en section transversale dudit conduit de dérivation (10) est supérieure à la plus petite aire en section transversale de canaux de refroidissement de seconde partie (14) de ladite seconde partie de refroidisseur de liquide (9).

9. Éolienne (1) selon l'une quelconque des revendications précédentes, dans laquelle ledit liquide est de l'huile ou un liquide contenant un antigel.

10. Éolienne (1) selon l'une quelconque des revendications précédentes, dans laquelle ledit refroidisseur de liquide (7) est agencé à l'extérieur de ladite nacelle (3).

11. Procédé destiné à refroidir un liquide circulant à travers un multiplicateur d'éolienne (15), un générateur (17) et/ou un convertisseur (18) agencés à l'intérieur d'une nacelle (3) d'une éolienne (1), au moyen d'un refroidisseur de liquide (7) agencé pour refroidir ledit liquide au moyen de l'air ambiant vers ladite nacelle (3), ledit procédé comprenant les étapes consistant à :
• guider du liquide à travers une première partie de refroidisseur de liquide (8) dudit refroidisseur de liquide (7), ladite première partie de refroidisseur de liquide (8) ayant une capacité de refroidissement de première partie,
• guider du liquide sortant de ladite première partie de refroidisseur de liquide (8) vers une seconde partie de refroidisseur de liquide (9) dudit refroidisseur de liquide (7), ladite seconde partie de refroidisseur de liquide (9) ayant une capacité de refroidissement de seconde partie, dans lequel ladite capacité de refroidissement de seconde partie est supérieure à ladite capacité de refroidissement de première partie, et dans lequel ladite première partie de refroidisseur de liquide (8) et ladite seconde partie de refroidisseur de liquide (9) sont formées comme une seule unité contiguë,
• réguler l'écoulement à travers un conduit de dérivation (10) au moyen d'un moyen de soupape (11) sur la base d'au moins une caractéristique dudit liquide s'écoulant à travers ledit refroidisseur de liquide (7), dans lequel ledit conduit de dérivation (10) guide au moins une partie dudit liquide sortant de la première partie de refroidisseur de liquide (8) au-delà de ladite seconde partie de refroidisseur de liquide (9), et
• guider au moins une partie dudit liquide sortant de ladite première partie de refroidisseur de liquide (8) à travers un conduit de dérivation (10) et au-delà de ladite seconde partie de refroidisseur de liquide (9), dans lequel l'écoulement à travers ledit conduit de dérivation (10) est régulé par un moyen de soupape (11) sur la base d'au moins une caractéristique dudit liquide s'écoulant à travers ledit refroidisseur de liquide (7).

12. Procédé selon la revendication 11, dans lequel l'écoulement à travers ledit conduit de dérivation (10) est commandé sur la base d'une température dudit liquide, dans lequel l'écoulement à travers ledit conduit de dérivation (10) est commandé sur la base d'une pression dudit liquide, ou dans lequel l'écoulement à travers ledit conduit de dérivation (10) est commandé sur la base d'une viscosité dudit liquide.

13. Procédé selon la revendication 11 ou 12, dans lequel ledit refroidisseur de liquide est refroidi passivement.

14. Procédé selon l'une quelconque des revendications 11 à 13, destiné à refroidir du liquide au moyen d'un refroidisseur de liquide (7) selon l'une quelconque des revendications 1 à 10.
